Europäisches Patentamt

European Patent Office

Office européen des brevets

(11) Publication number: **0 056 417**

**B1**

(12) **EUROPEAN PATENT SPECIFICATION**

(45) Date of publication of patent specification: **15.10.86**

(21) Application number: **81902331.8**

(22) Date of filing: **24.07.81**

(86) International application number:
**PCT/FI81/00063**

(87) International publication number:
**WO 82/00359 04.02.82 Gazette 82/04**

(51) Int. Cl.⁴: **G 01 N 21/03**

(54) SET OF CUVETTES.

(30) Priority: **24.07.80 FI 802345**

(43) Date of publication of application:
**28.07.82 Bulletin 82/30**

(45) Publication of the grant of the patent:
**15.10.86 Bulletin 86/42**

(84) Designated Contracting States:
**AT CH DE FR GB LI LU NL SE**

(56) References cited:
**CH-A- 505 381**
**DE-A-2 451 769**
**GB-A-1 257 337**
**SE-B- 364 367**
**US-A-3 617 222**

(73) Proprietor: **LABSYSTEMS OY**
**Pulttitie 9**
**SF-00810 Helsinki 81 (FI)**

(72) Inventor: **SUOVANIEMI, Osmo**
**Armas Lindgrenintie 15 A**
**SF-00570 Helsinki 57 (FI)**

(74) Representative: **Tillbrook, Christopher John**
**c/o Reginald W. Barker & Co. 13, Charterhouse**
**Square**
**London EC1M 6BA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is concerned with a cuvette set which comprises several cuvettes and which is intended for use in a photometer of the vertical measurement type, each cuvette being provided with a bottom window for optical reading. With the exception of the optical windows in the bottom parts of the cuvettes, the parts of the cuvette set are impervious to the light of measurement.

The several cuvettes of the cuvette set are connected to one another either permanently or detachably and are intended to be used for the measurement of the properties of a reaction mixture contained in a cuvette by means of radiation and a detector that receives radiation, with a measurement beam of radiation passing substantially in the direction of the vertical axis of the cuvette through the measurement window in the bottom of the cuvette.

Cuvette sets with cuvette walls and bottoms made wholly of a transparent material, such as those taught in DE 2,451,769, involve the problem that, during measurement, the measurement beams passing via different cuvettes must be separated from each other by means of walls placed between the cuvettes, otherwise the diffused light from parallel beams of measurement and from the environment disturbs the measurement of adjoining cuvettes. On the other hand fabrication complexities are involved in combining different, in particular transparent and opaque, materials for the cuvette walls and bottom, as for example taught in US 3,617,222.

According to the invention there is provided a cuvette set which comprises several cuvettes and which is intended for use in a photometer of the vertical measurement type, each cuvette being provided with opaque side walls and a bottom measurement window for optical reading, the side walls of the cuvettes comprising material that substantially inhibits the passage therethrough of measurement radiation, such as light, characterised in that the inside face of the bottom window of each cuvette is coated with a thin layer of material which promotes reagent binding by surface contact within the cuvette and which is the same as the radiation inhibiting material of the side walls, but which layer is however, so thin that it allows the passage of at least the major part of the radiation through the bottom window.

Preferably, the substantially inhibiting material forms a part of said side walls, this part extending in a direction from the inside face to the outside face of the side walls.

Thus the vertical walls of each cuvette in the cuvette set matrix is either partly or wholly of a material impervious or opaque to the measurement beams.

However, the optical window of each cuvette in the cuvette set matrix is quite pervious or transparent to the beams of measurement. Such transparency may be achieved by extruding the window out of transparent material, such as polystyrene, acrylic plastic, PVC or TPX. In fact, the cuvette-set matrix as a whole can be extruded out of two different materials.

In a preferred embodiment of the invention the optical windows of the cuvettes are placed higher than the level of the bottom face of the cuvette-set matrix, being protected, e.g., from dirt and scratches, and in each cuvette the upper face of the optical window corresponds the curved form of the liquid surface in the cuvette, so that the path of light in the liquid is as long as if the upper face of the optical window in each cuvette and the free surface of the liquid in the cuvette were horizontal. Moreover, at some edge of the cuvette-set matrix in accordance with the present invention there may be an optically readable code of which one part informs the measurement apparatus of what method is concerned and the other part states what number or letter constitutes the code of the cuvette-set matrix concerned.

The cuvette-set matrix in accordance with the invention is suitable for use in analyzer apparatus operating by means of the principle of vertical measurement (Suovaniemi, Osmo: "Performance and properties of the Finnpipette Analyzer System", *Proceedings of the Second National Meeting on Biophysics and Biotechnology in Finland,* 183, 1976, and "Method for the improvement of the dosage and measurement results of chemical analyses", U.S. Patent 4,144,030) such as FP—9 and FP—901 Analyzer Systems (Labsystems Oy, Finland) as well as Titertek Multiscan (Eflab Oy, Finland).

In a cuvette-set matrix the reaction results and codes can be measured in one wide matrix so that the measurement radiation or any other measurable signal, produced for each sample and code, is passed to each cuvette and code of the matrix and further to the corresponding detector in the vertical direction.

The cuvette-set matrix to be described now is suitable for methods in which measurements are based, e.g., on photometry, spectrophotometry, fluorometry, turbidometry, or where a laser beam is used.

The cuvette-set matrix is highly suitable for use in, e.g., EIA (enzyme immuno assay) reactions, blood-group serology (e.g. ABO and Rh), in HLA (human leucocyte antigen) serology, in MIC (minimum inhibitory concentration) determinations, and also in other modes of ascertaining the growth or inhibition of growth of micro-organisms, and further in all methods based on the CF (complement fixation) phenomenon.

The following list includes some of the advantages of the cuvette-set matrix in accordance with the present invention:

1. Each cuvette in the cuvette-set matrix prevents the beams of measurement of the cuvette from disturbing the measurement of the adjoining cuvettes, because only the optical windows are pervious to the beams of measurement.

2. The choice of the raw-material for the cuvette-set matrix is very free except in respect of the optical windows. For the optical window thin layer, a raw-material is chosen that is poorly pervious to the beam of measurement and to which some desired reagent (e.g., antigen, antibody, enzyme) can be fixed easily and in the desired way.

3. In the optical window of each cuvette in the cuvette-set matrix, the portion of the window facing towards the inside of the cuvette is a thin layer of a material which can bind certain reagents in the desired way and which can, in certain cases, function as the optical window alone. This thin layer, if it constitutes a part of the optical window, is made of a material different from the material of the other part of the optical window, and placed on the inside of the cuvette, inhibits the passage of the beams of measurement to an extent dependent upon its thickness, i.e. the thinner it is the less the inhibitive effect.

This construction makes it possible for the inside face of each cuvette in the cuvette-set matrix to be of the same material and, consequently, .with the same and the desired chemical and/or physical ability to bind reagents. Thereby the area having a certain binding ability in each cuvette is also enlarged, and, as a consequence of that, the sensitivity and reliability of the analysis method at each particular time in use is improved.

4. The present invention can also be applied to a cuvette-set matrix that consists of a separate support for individual cuvettes and of cuvettes placed onto this support so as to constitute a matrix, which cuvettes may, in the way described above, be made of two different raw-materials. The transfer of beams of measurement from one cuvette into the other, or any other, disturbance of the measurement taking place in the adjoining cuvettes may be prevented by manufacturing the support of the cuvettes and/or the cuvettes themselves out of a material impervious to the beams of measurement.

The invention will be described in more detail below with reference to the attached drawings, wherein

Figure 1 is a perspective view of a cuvette-set matrix in accordance with the invention,

Figure 2 shows a vertical section of a part of a cuvette-set matrix not forming part of the claimed invention,

Figure 2a shows a section at a—a in Figure 2, and

Figure 3 shows a vertical section of one cuvette of the cuvette-set matrix in accordance with the invention.

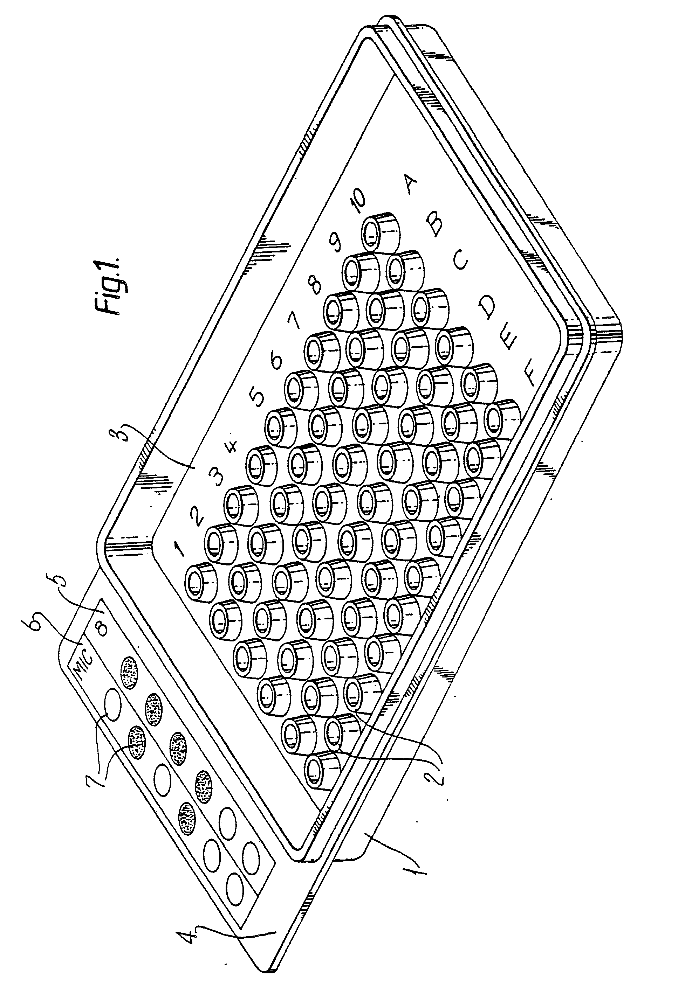

In Figure 1 the cuvette-set matrix includes cuvettes 2, a matrix base 3, a code position 4, and therein a number code 5 and a method code 6, both of which can be read by using the same type of a beam of measurement for each element 7 of the code as is used for each cuvette 2.

In Figure 1 each cuvette in the cuvette-set matrix is coded by means of number 1 to 10 (vertical line) and by means of letter A to F (horizontal line). Thereby the apparatus of measurement indicates the results in the order, e.g., as follows:

MIC 8 A 1 0.050
8 A 2 0.125

which means that the MIC method in the 8th cuvette-set matrix, e.g., the absorbance value of cuvette A 2 is 0.125. The results may of course also be indicated as values other than absorbance values, and, moreover, they may be classified and/or combined in the way most appropriate in each particular case, e.g. by making use of the electronics of the apparatus of measurement in consideration of the requirements of the method at each particular time concerned, or of any other requirements.

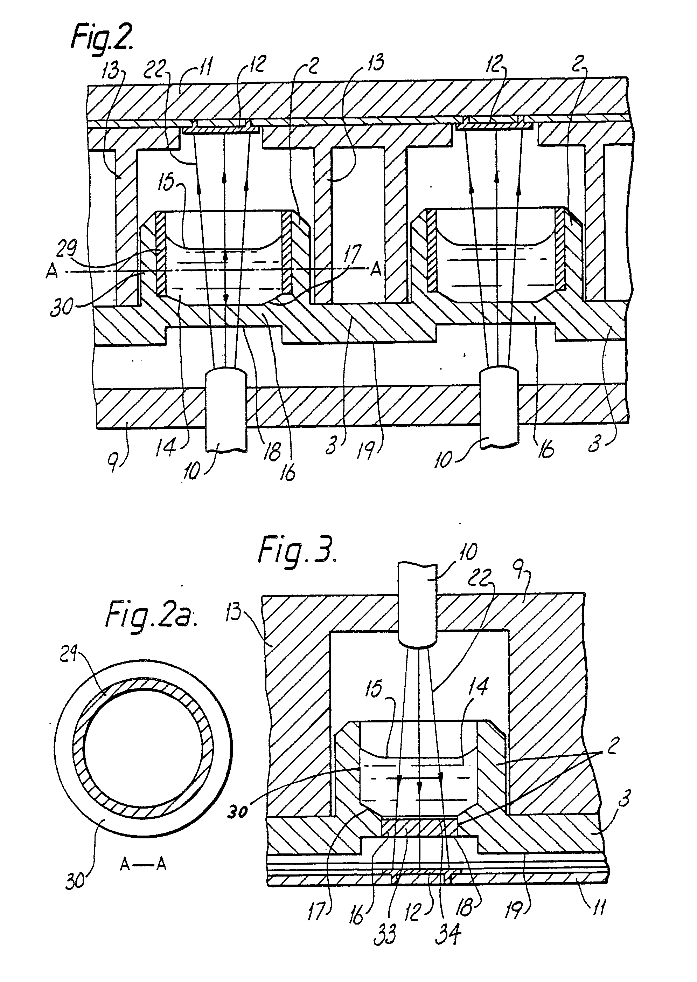

Figure 2 does not relate to the invention but shows two cuvettes 2 of the cuvette-set matrix as a sectional view and as placed in the measurement head of the measurement apparatus. In Figure 2 the matrix 9 of the measurement beams and therein the sources 10 of measurement beams are seen below each cuvette 2. Above the cuvettes there are the detector matrix 11 and therein the detectors 12. For each cuvette 2 there are the corresponding sources 10 of measurement beams and detectors 12. In Figure 2 each cuvette 2 is protected from measurement beams of the adjoining cuvettes, from diffused beams, external beams, and from any other radiation disturbing the measurement by means of a limiter 13 placed around the cuvettes.

In Figure 2, the cuvette 2 is illustrated as containing liquid 14, whose free liquid surface 15 is concave. In order to compensate for this concavity, the inside face of the window 16 of each cuvette 2 is provided with an additional rim or equivalent appendix 17, by means of which, despite the curved form of the liquid surface 15, the path a of light in the liquid is maintained as long as possible. The length of the path a of light and the height of the liquid column are substantially equal at every point of the cuvette, also at the sides. In Figure 2, the lower face 18 of the optical window 16 is placed higher than the bottom face 19 of the cuvette-set matrix.

In Figure 2, the inner face of the cuvettes 2 in the cuvette-set matrix is protected by a protective layer 29, which prevents the entrance of radiation disturbing the measurement into the cuvette. In the section A—A of Figure 2, in Figure 2a, the protective layer 29 and a wall portion 30 are seen. The operation of the protective layer 29 shown in Figure 2 substitutes for limiters 13 and, moreover, it may be made of the material appropriate in each particular case for binding the desired reagent (e.g. antigen, antibody, haptene, enzyme) in the desired way substantially to the protective layer.

In Figure 3 a cuvette 2 of the cuvette-set matrix and the corresponding source 10 of measurement beams together with the measurement beams 22 emitted from same are seen. The measurement beams 22 pass via the liquid 14 in the cuvette 2 through the optical window 16 of the cuvette to the corresponding detector 12 in the detector matrix 11. The matrix 9 of measurement beams is provided with limiters 13 for the protection of each cuvette from radiation disturbing the measurement. The sources of measurement beams are fitted above the cuvettes and the detectors below the cuvettes.

Further, it can be seen from Figure 3 that the part 33 of the optical window 16 pervious to the beams of measurement may be made of a material totally different from the material of the other parts of the cuvette-set matrix. On the upper face of this part 33 pervious to the beams of measurement there is a layer 34 that is made of the same material as the other parts of the cuvette-set matrix. In such a case, if the layer 34 is very thin, it does not prevent the passage of the measurement beams 22 onto the detector 26 to any great extent. In some cases the layer 34 may function as the optical window alone. In the walls 2 the same material, as a thicker construction, prevents the passage of radiation from the adjoining cuvettes and any other external radiation almost completely.

If the material of the cuvette set matrix, in other respects except for the part 33, is not pervious to the beams of measurement, limiters 13 are unnecessary. The layer 34 shown in Figure 3 can be extruded out of the same material as the cuvette-set matrix is made of, with the exception of part 33. The material is chosen so that the desired type of fixing of a certain reagent (e.g. antigen, antibody, haptene or emzyme) to the material concerned is obtained, so that the layer 34 constitutes an additional face for the reagent. Either the part 33 or the layer 34 may also be used as a filter, e.g., for selecting the wave length of the measurement radiation. Also the part 33 may act so as to inhibit the access of a certain type of radiation to the detector 12, and the layer 34 may at the same time function as a filter for the transfer of a desired type of radiation to the detector.

## Claims

1. A cuvette set which comprises several cuvettes (2) and which is intended for use in a photometer of the vertical measurement type, each cuvette (2) being provided with opaque side walls (30) and a bottom measurement window (16) for optical reading, the side walls (30) of the cuvettes (2) comprising a material that substantially inhibits the passage therethrough of measurement radiation, such as light (22), characterised in that the inside face of the bottom window (16) of each cuvette (2) is coated with a thin layer (34) of material which promotes reagent binding by surface contact within the cuvette and which is the same as the radiation inhibiting material of the side walls, but which layer is however, so thin that it allows the passage of at least the major part of the radiation through the bottom window.

2. A cuvette set as claimed in Claim 1, wherein the substantially inhibiting material forms a part of said side walls (30), this part extending in a direction from the inside face to the outside face of the side walls (30).

## Patentansprüche

1. Küvettensatz mit mehreren Küvetten, der in einem Fotometer des Vertikalmeßtyps verwendet werden soll, wobei jede Küvette (2) mit opaken Seitenwänden (30) und einem Bodenmeßfenster (16) zur optischen Ablesung versehen ist und die Seitenwände (30) der Küvetten (2) ein Material aufweisen, das den Durchtritt von Meßstrahlung, wie Licht (22), im wesentlichen verhindert, dadurch gekennzeichnet, daß die Innenseite des Bodenfensters (16) jeder Küvette (2) mit einer dünnen Schicht (34) aus einem Material überzogen ist, das eine Reagensbindung bei Oberflächenkontakt innerhalb der Küvette fördert und das das gleiche ist wie das die Strahlung hindernde Material der Seitenwände, wobei die Schicht jedoch so dünn ist, daß sie den Durchtritt wenigstens des Hauptanteiles der Strahlung durch das Bodenfenster gestattet.

2. Küvettensatz nach Anspruch 1, dadurch gekennzeichnet, daß das im wesentlichen hindernde Material einen Teil der Seitenwände (30) bildet, wobei dieser Teil sich in einer Richtung von der Innenfläche zur Außenfläche der Seitenwände (30) erstreckt.

## Revendications

1. Jeu de cuvettes qui comprend plusieurs cuvettes (2) et qui est destiné à être utilisé dans un photomètre de type à mesure verticale, chaque cuvette (2) étant pourvue de parois latérales (10) opaques et d'une fenêtre de mesure (16) prévue dans le fond pour une lecture optique, les parois latérales (30) des cuvettes (2) étant constituées en un matériau qui inhibe essentiellement le passage à travers celui-ci du rayonnement de mesures, tel que la lumière (22), caractérisé par le fait que la face intérieure de la fenêtre (16) de fond de chaque cuvette (2) est revêtue d'une couche mince (34) d'un matériau qui favorise la fixation d'un réactif par contact de surface à l'intérieur de la cuvette et qui est identique au matériau l'inhibiteur de rayonnement des parois latérales, mais dont la couche est toutefois si mince qu'il autorise le passage d'au moins la partie principale du rayonnement à travers la fenêtre de fond.

2. Jeu de cuvettes selon la revendication 1, caractérisé par le fait que le matériau essentiellement inhibiteur forme une partie desdites parois latérales (30), cette partie s'étendant dans une direction allant de la face intérieure à la face extérieure des parois latérales (30).

Fig.1.

**Fig.2.**

**Fig.3.**

**Fig.2a.**

A — A